# EUROPEAN PATENT APPLICATION

(11) **EP 2 623 311 A1**
(43) Date of publication of application: **07.08.2013**
(21) Application number: 11828835.6
(22) Date of filing: 16.09.2011
(51) Int. Cl.: B32B 15/08

(54) **METHOD FOR REINFORCING METAL PLATES AND REINFORCEMENT STRUCTURE**

(30) Priority: 30.09.2010 JP 2010221510
(71) Applicant: Nitto Denko Corporation, Osaka 567-8680 (JP)
(72) Inventor: MASE, Takuya, Ibaraki-shi Osaka 567-8680 (JP); FUJII, Takahiro, Ibaraki-shi Osaka 567-8680 (JP)
(74) Representative: Schwabe - Sandmair - Marx
(86) International application number: PCT/JP2011/071217
(87) International publication number: WO 2012/043275

(57) **Abstract**

A reinforcing method of a metal plate includes bonding a reinforcing sheet including a constraining layer and a reinforcing layer which is laminated on a surface of the constraining layer and is prepared from a thermoplastic resin composition to a metal plate after being coated.

## Description

### Technical Field

The present invention relates to a reinforcing method and a reinforcing structure of a metal plate, to be specific, to a reinforcing method of a metal plate used in various industrial products and a reinforcing structure of a metal plate reinforced by the method.

### Background Art

Conventionally, it has been known that in reinforcement of the metal plate such as a steel plate used in various industrial products including automobiles and the like, a reinforcing sheet is used.

For example, a method for reinforcing a steel plate has been proposed in which a steel plate reinforcing sheet including a resin layer prepared from a steel plate reinforcing composition which contains an epoxy resin, an acrylonitrile-butadiene rubber, a curing agent, and a foaming agent is bonded to a steel plate to be thereafter allowed to foam and cure using heat at the time of electrodeposition coating (ref: for example, Patent Document 1).

Also, a method for reinforcing a panel has been proposed in which a panel reinforcing material including a sheet material prepared from a one-liquid thermally curable type epoxy resin composition is bonded to a panel after the electrodeposition coating to thereafter allow the sheet material to cure at relative temperature in an intermediate coating or a top coating (ref: for example, Patent Document 2).

### Prior Art Document

### Patent Document

Patent Document 1: Japanese Unexamined Patent Publication No. 2005-139218
Patent Document 2: Japanese Unexamined Patent Publication No. H10-140125

### Summary of the Invention

### Problems to be solved by the Invention

However, in the method in Patent Document 1, the steel plate reinforcing sheet is bonded to the steel plate before the electrodeposition coating and thereafter, the steel plate is subjected to the electrodeposition coating, so that a bonded surface of the steel plate reinforcing sheet in the steel plate is not subjected to the electrodeposition coating to be brought into an uncoated surface. Therefore, in the steel plate having such a bonded surface, corrosion may occur due to the presence of moisture.

Also, in the method in Patent Document 2, the panel reinforcing material is bonded to the panel after the electrodeposition coating, so that the above-described corrosion can be prevented. However, the sheet material shrinks due to the curing of the epoxy resin. Therefore, there is a disadvantage that stress is applied to the steel plate which is bonded to the panel reinforcing material and in this way, a deformation occurs in the steel plate, so that an appearance defect occurs.

It is an object of the present invention to provide a method for producing a metal plate and a reinforcing structure thereof which have excellent reinforcing properties, appearance, and corrosion resistance.

### Solution to the Problems

A reinforcing method of a metal plate of the present invention includes bonding a reinforcing sheet including a constraining layer and a reinforcing layer which is laminated on a surface of the constraining layer and is prepared from a thermoplastic resin composition to a metal plate after being coated.

In the reinforcing method of a metal plate of the present invention, it is preferable that the thermoplastic resin composition contains a polymer of a monomer containing conjugated dienes and/or its hydrogenated polymer; it is preferable that the thermoplastic resin composition further contains a tackifier; and furthermore, it is preferable that the mixing ratio of the tackifier with respect to 100 parts by mass of the polymer and the hydrogenated polymer is 40 to 200 parts by mass.

In the reinforcing method of a metal plate of the present invention, it is preferable that the constraining layer is a metal foil and/or a glass cloth and it is preferable that the metal foil is made of stainless steel and/or aluminum.

In the reinforcing method of a metal plate of the present invention, it is preferable that the reinforcing sheet is bonded to the metal plate and then, the reinforcing sheet is heated to be 80°C or more.

In the reinforcing method of a metal plate of the present invention, it is preferable that the reinforcing sheet is heated to be 80°C or more in advance and then, the heated reinforcing sheet is bonded to the metal plate.

In the reinforcing method of a metal plate of the present invention, it is preferable that the reinforcing sheet is bonded to the metal plate which is in a state of 80°C or more.

A reinforcing structure of a metal plate of the present invention includes reinforcing a metal plate after being coated by allowing a reinforcing sheet to be bonded thereto, wherein the reinforcing sheet includes a constraining layer and a reinforcing layer which is laminated on a surface of the constraining layer and is prepared from a thermoplastic resin composition.

### Effect of the Invention

In the reinforcing method of a metal plate of the present invention, the metal plate can be surely reinforced by bonding the reinforcing sheet which includes the reinforcing layer and the constraining layer to the metal plate.

The reinforcing layer is prepared from the thermoplastic resin composition, so that even when bonded by heating, it is not cured and shrunk and therefore, it is possible to prevent that stress is applied to the metal plate to occur an appearance defect caused by a deformation.

In addition, the reinforcing sheet is bonded to the metal plate after being coated, so that a bonded surface serves as a coated surface at the time of reinforcement of the metal plate. Therefore, even when the moisture is present at the bonded surface, corrosion caused by the moisture can be prevented and the metal plate can be reinforced, while the improvement of the corrosion resistance is attempted.

As a result, the reinforcing structure of a metal plate which is reinforced by the reinforcing method of a metal plate described above has excellent reinforcing properties, appearance, and corrosion resistance.

### Brief Description of the Drawings

[FIG. 1] FIG. 1 shows process drawings for illustrating one embodiment of a reinforcing method of a metal plate of the present invention:
   (a) illustrating a step of preparing a reinforcing sheet and peeling off a release film and
   (b) illustrating a step of bonding the reinforcing sheet to the metal plate.
[FIG. 2] FIG. 2 shows a plan view for illustrating a measurement of the strain amount of Example:
   (a) illustrating a bottom view of a steel plate and
   (b) illustrating a plan view of the steel plate and the reinforcing sheet.

### Embodiment of the Invention

A reinforcing method of a metal plate of the present invention includes bonding a reinforcing sheet to a metal plate after being coated.

The reinforcing sheet includes a constraining layer and a reinforcing layer which is laminated on the surface of the constraining layer.

The constraining layer is provided so as to impart toughness to the reinforcing layer after being bonded and heated. The constraining layer is in a sheet shape, light in weight, and a thin film. Also, the constraining layer is formed from a material that allows close contact and integration with the reinforcing layer. To be specific, examples of the material include a glass cloth, a resin impregnated glass cloth, a non-woven fabric, a metal foil, a carbon fiber, and a polyester film.

The glass cloth is cloth formed from a glass fiber and a known glass cloth is used.

The resin impregnated glass cloth is obtained by performing an impregnation treatment of a synthetic resin such as a thermosetting resin and a thermoplastic resin into the above-described glass cloth and a known resin impregnated glass cloth is used. Examples of the thermosetting resin include an epoxy resin, a urethane resin, a melamine resin, and a phenol resin. Also, examples of the thermoplastic resin include a vinyl acetate resin, an ethylene-vinyl acetate copolymer (EVA), a vinyl chloride resin, and an EVA-vinyl chloride resin copolymer. The above-described thermosetting resins and thermoplastic resins can be used alone or in combination, respectively.

An example of the non-woven fabric includes a non-woven fabric formed of a fiber such as a wood fiber (a wood pulp and the like); a cellulose fiber (for example, a regenerated cellulose fiber such as rayon, a semi-synthetic cellulose fiber such as acetate, a natural cellulose fiber such as hemp and cotton, or a blended yam thereof); a polyester fiber; a polyvinyl alcohol (PVA) fiber; a polyamide fiber; a polyolefin fiber, a polyurethane fiber; and a cellulose fiber (hemp, or hemp and another cellulose fiber).

An example of the metal foil includes a metal foil made of a known metal such as aluminum, stainless steel, iron, copper, gold, or alloys thereof.

The carbon fiber is cloth formed from a fiber mainly composed of carbon and a known carbon fiber is used.

Examples of the polyester film include a polyethylene terephthalate (PET) film, a polyethylene naphthalate (PEN) film, and a polybutylene terephthalate (PBT) film.

Of the constraining layers, in view of adhesiveness, strength, and cost, preferably, a metal foil and a glass cloth are used and in view of strength, more preferably, a metal foil is used.

The thickness of the constraining layer is, for example, 0.05 to 2.0 mm, or preferably 0.1 to 1.0 mm.

The reinforcing layer is formed by forming the thermoplastic resin composition into a sheet shape.

The thermoplastic resin composition develops the adhesive properties (the pressure-sensitive adhesion) by, for example, heating at 80°C or more.

The thermoplastic resin composition contains, for example, a polymer of a monomer containing conjugated dienes and/or its hydrogenated polymer.

Preferably, the monomer contains the conjugated dienes as essential components and a copolymerizable monomer which is copolymerizable with the conjugated dienes as an arbitrary component.

Examples of the conjugated dienes include 1,3-butadiene, isoprene (2-methyl-1,3-butadiene), and chloroprene (2-chloro-1,3-butadiene).

As the copolymerizable monomer, a monomer having at least one double bond is used. Examples thereof include an aliphatic vinyl monomer (olefins) such as ethylene, propylene, and isobutylene (2-methylpropene); an aromatic vinyl monomer such as styrene; a cyano group-containing vinyl monomer such as (meth)acrylonitrile; and unconjugated dienes such as 1,2-butadiene.

The copolymerizable monomers can be used alone or in combination of two or more. Preferably, an aromatic vinyl monomer is used.

To be specific, examples of the above-described polymer of a monomer containing conjugated dienes include a homopolymer of a monomer composed of the above-described conjugated dienes only, such as polybutadiene, polyisoprene, and a chloroprene polymer (CR) and a copolymer of a monomer composed of the above-described conjugated dienes and copolymerizable monomer, such as an acrylonitrile-butadiene (random) copolymer, a styrene-butadiene-styrene (block) copolymer (SBS), a styrene-butadiene (random) copolymer, a styrene-isoprene-styrene (block) copolymer (SIS), and an isobutylene-isoprene (random) copolymer.

When the polymer is the above-described copolymer, the mixing ratio of the copolymerizable monomer in the copolymerization with respect to the total amount of 100 parts by mass of the monomer is, for example, 5 to 50 parts by mass.

The polymers can be used alone or in combination of two or more.

As the polymer, preferably, SBS is used.

In the above-described hydrogenated polymer, an unsaturated bond (a double bond portion) derived from the conjugated dienes is completely hydrogenated or partially hydrogenated. Preferably, an unsaturated bond is completely hydrogenated. To be specific, examples of the hydrogenated polymer include a styrene-ethylene-butylene-styrene (block) copolymer (SEBS), a styrene-ethylene-propylene-styrene (block) copolymer (SEPS), and a styrene-ethylene-styrene (block) copolymer (SES).

The hydrogenated polymers can be used alone or in combination of two or more.

Of the hydrogenated polymers, preferably, SEBS is used.

The hydrogenated polymer does not substantially contain the unsaturated bond by the above-described hydrogenation of the polymer, so that the hydrogenated polymer is difficult to be thermally deteriorated under a high temperature atmosphere and therefore, the heat resistance of the reinforcing layer can be improved.

The viscosity of 25 % by mass toluene solution (at 25°C) of the above-described polymer and hydrogenated polymer is, for example, 100 to 100000 mPa·s, or preferably 500 to 10000 mPa·s.

The melt flow rate (MFR) of the polymer and the hydrogenated polymer at the temperature of 80°C and the mass of 2.16 kg is, for example, 5 (g/10 min) or less, or preferably 4 (g/10 min) or less, and is usually 0 (g/10 min) or more. Also, the melt flow rate (MFR) of the polymer and the hydrogenated polymer at the temperature of 120°C and the mass of 5 kg is, for example, 18 (g/10 min) or less, or preferably 15 (g/10 min) or less, and is usually 0 (g/10 min) or more.

Of the polymers and the hydrogenated polymers (hereinafter, may be simply referred to as a thermoplastic component), a plurality of types of the thermoplastic components each having different MFR from each other can be used in combination.

For example, as the polymer and the hydrogenated polymer, a combination of a low MFR thermoplastic component in which the MFR is low and a high MFR thermoplastic component in which the MFR is higher than that of the low MFR thermoplastic component is used.

By using the low MFR thermoplastic component and the high MFR thermoplastic component in combination, both of the adhesive properties and the reinforcing properties can be achieved.

To be specific, at the temperature of 190°C and the mass of 2.16 kg, a combination of a low MFR thermoplastic component having the MFR of less than 1.0 (g/10 min) (usually, 0 to 1.0 (g/10 min)) and a high MFR thermoplastic component having the MFR of 1.0 to 5.0 (g/10 min) is used. Preferably, a combination of a low MFR thermoplastic component having the MFR of not more than 0.5 (g/10 min) (usually, 0 to 0.5 (g/10 min)) and a high MFR thermoplastic component having the MFR of 1.5 to 4.5 (g/10 min) is used, or more preferably, a combination of a low MFR thermoplastic component having the MFR of not more than 0.4 (g/10 min) (usually, 0 to 0.4 (g/10 min)) and a high MFR thermoplastic component having the MFR of 2.0 to 4.0 (g/10 min) is used.

Also, at the temperature of 200°C and the mass of 5 kg, a combination of a low MFR thermoplastic component having the MFR of less than 6 (g/10 min) (usually, not less than 0 (g/10 min) and less than 6.0 (g/10 min)) and a high MFR thermoplastic component having the MFR of 6.0 to 18 (g/10 min) is used. Preferably, a combination of a low MFR thermoplastic component having the MFR of not more than 5.0 (g/10 min) (usually, 0 to 5.0 (g/10 min)) and a high MFR thermoplastic component having the MFR of 8.0 to 16 (g/10 min) is used, or more preferably, a combination of a low MFR thermoplastic component having the MFR of not more than 4.0 (g/10 min) (usually, 0 to 4.0 (g/10 min)) and a high MFR thermoplastic component having the MFR of 9.0 to 15 (g/10 min) is used.

The mixing ratio of the low MFR thermoplastic component and the high MFR thermoplastic component is, by mass basis thereof, for example, 10/90 to 90/10, preferably 20/80 to 85/15, or more preferably 30/70 to 80/20.

The durometer hardness (type A) of the polymer and the hydrogenated polymer in conformity with ISO 76109 is, for example, 60 to 90 degrees, or preferably 65 to 87 degrees.

Preferably, a tackifier is further contained in the thermoplastic resin composition.

The tackifier is contained in the thermoplastic resin composition so as to improve the adhesiveness between the reinforcing layer and the metal plate or to improve the reinforcing properties at the time of reinforcement of the metal plate.

Examples of the tackifier include a rosin resin, a terpene resin, a coumarone-indene resin, a petroleum resin (for example, a hydrocarbon petroleum resin and the like, such as an alicyclic petroleum resin (a cycloalkyl petroleum resin), an aliphatic-aromatic copolymer petroleum resin, and an aromatic petroleum resin), and a phenol resin (for example, a terpene modified phenol resin and the like).

The softening point of the tackifier is, for example, 50 to 150°C, or preferably 50 to 130°C.

The softening point of the tackifier is measured by a ring and ball test.

The tackifiers can be used alone or in combination of two or more.

Of the tackifiers, preferably, a petroleum resin and a phenol resin are used, or more preferably, a petroleum resin is used.

The mixing ratio of the tackifier with respect to 100 parts by mass of the polymer and the hydrogenated polymer is, for example, 40 to 200 parts by mass, or preferably 50 to 170 parts by mass.

When the mixing proportion of the tackifier is below the above-described range, there may be a case where the adhesiveness between the reinforcing layer and the metal plate cannot be sufficiently improved or the reinforcing properties of the metal plate cannot be sufficiently improved. When the mixing proportion of the tackifier exceeds the above-described range, the shape retention of the reinforcing layer may be reduced.

In addition to the above-described component, an additive can be also added to the thermoplastic resin composition. Examples of the additive include fillers and furthermore, oxidation inhibitors, softeners (for example, naphthenic oil, paraffinic oil, and the like), thixotropic agents (for example, montmorillonite and the like), lubricants (for example, stearic acid and the like), pigments, antiscorching agents, stabilizers, antioxidants, ultraviolet absorbers, colorants, fungicides, and flame retardants.

Examples of the fillers include calcium carbonate (for example, heavy calcium carbonate, light calcium carbonate, Hakuenka, and the like), silica, magnesium silicate (for example, talc and the like), bentonite (for example, organic bentonite and the like), clay, aluminum silicate, and carbon black. The fillers can be used alone or in combination. Preferably, calcium carbonate and carbon black are used.

The addition ratio of the additive with respect to 100 parts by mass of the polymer and the hydrogenated polymer is, among all, when the additive is a filler, for example, 1 to 200 parts by mass.

The above-described components are blended at the above-described mixing ratio to be stirred and mixed, so that the thermoplastic resin composition can be prepared.

As a method for laminating the reinforcing layer on the surface of the constraining layer, a method (a direct forming method) is used in which, for example, the above-described components are dissolved or dispersed in a known solvent (for example, toluene and the like) or water at the above-described mixing proportion to prepare a solution or a dispersion liquid and thereafter, the obtained solution or dispersion liquid are applied to the surface of the constraining layer to be then dried.

Alternatively, as a method for laminating the reinforcing layer on the surface of the constraining layer, another method (a transfer method) is used in which, for example, the solution or the dispersion liquid obtained in the description above is applied to the surface of a release film to be described later to be then dried, so that the reinforcing layer is formed to be thereafter transferred to the surface of the constraining layer.

Furthermore, a method (a direct forming method) is also used in which the above-described components (excluding the above-described solvent and water) are directly kneaded with, for example, a mixing roll, a pressurized kneader, an extruder, or the like to prepare a kneaded product and then, the obtained kneaded product is molded into a sheet shape by, for example, a calender molding, an extrusion molding, a press molding, or the like to form the reinforcing layer to be formed on the surface of the constraining layer. To be specific, the kneaded product is disposed between the constraining layer and the release film (described later) to be sandwiched and thereafter, they are extended by applying pressure into a sheet shape by, for example, the press molding. Alternatively, another method (a transfer method) is used in which the formed reinforcing layer is laminated on the surface of the release film to be thereafter transferred to the surface of the constraining layer.

The thickness of the reinforcing layer formed in this way is, for example, 0.02 to 3.0 mm, or preferably 0.03 to 1.4 mm.

The thickness of the reinforcing sheet obtained in this way is, for example, 0.25 to 5.0 mm, or preferably 0.4 to 2.3 mm.

When the thickness of the reinforcing sheet exceeds the above-described range, there may be a case where the lightening of the reinforcing sheet becomes difficult and the production cost is increased. When the thickness of the reinforcing sheet is below the above-described range, the reinforcing properties may not be sufficiently improved.

In the obtained reinforcing sheet, the release film (a separator) can be bonded to the surface (the surface which is the opposite side with respect to the back surface to which the constraining layer is bonded) of the reinforcing layer as required until it is actually used.

Examples of the release film include a known release film such as a synthetic resin film including a polyethylene film, a polypropylene film, and a polyethylene terephthalate film and a paper film laminated with polyethylene or the like.

Examples of the metal plate include a steel plate, an iron plate, a stainless steel plate, an aluminum plate, or an alloy plate thereof. Preferably, a steel plate and an aluminum plate are used.

The metal plate is coated in advance. The coating is performed in accordance with the type or use of the metal plate.

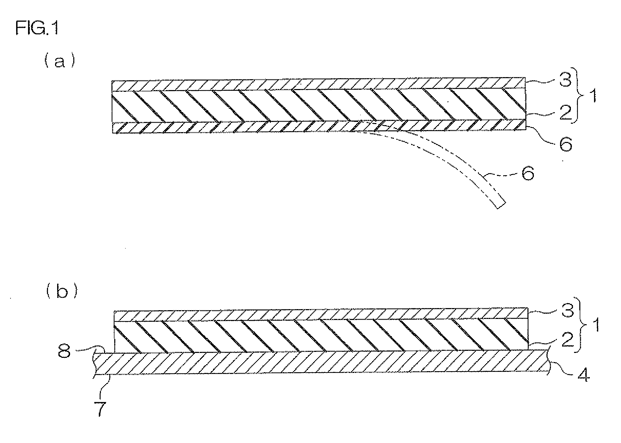

FIG. 1 shows process drawings for illustrating one embodiment of a reinforcing method of a metal plate of the present invention.

Next, one embodiment of the reinforcing method of a metal plate of the present invention is described with reference to FIG. 1.

In this method, first, a reinforcing sheet 1 and a metal plate 4 are prepared and the reinforcing sheet 1 is bonded to the metal plate 4.

As shown in FIG. 1 (a), in the reinforcing sheet 1, a reinforcing layer 2 is laminated on the surface of a constraining layer 3 and a release film 6 is bonded to the surface (the surface which is the opposite side with respect to the back surface on which the constraining layer 3 is laminated) of the reinforcing layer 2 as required.

The metal plate 4 is provided with, for example, a plate-like portion and to be more specific, is formed, in the plate-like portion, so as to include an outer surface 7 which shows in the appearance and an inner surface 8 which faces inwardly and does not show in the appearance.

As shown in FIG. 1 (b), the metal plate 4 is a metal plate used in various industrial products. An example of the metal plate includes a metal plate used in transportation machinery or electric appliances. Preferably, an automobile metal plate (to be specific, a door panel and the like) constituting an automobile body is used. The automobile metal plate usually includes an outer surface of casing 7 and an inner surface of casing 8.

In the automobile metal plate, for example, first, an electrodeposition coating is performed for anti-corrosion treatment. Thereafter, an intermediate coating is performed for resistance to chipping and subsequently, a top coating is performed for appearance treatment.

The metal plate 4 used in the method is at least a metal plate after the electrodeposition coating is terminated. To be specific, any of a metal plate after the electrodepostiion coating and before the intermediate coating, a metal plate after the intermediate coating and before the top coating, or furthermore, a metal plate after the top coating may be used.

In order to bond the reinforcing sheet 1 to the metal plate 4, as shown by a phantom line in FIG. 1 (a), first, the release film 6 is peeled from the surface of the reinforcing layer 2 and subsequently, as shown in FIG. 1 (b), the surface of the reinforcing layer 2 is brought into contact with the inner surface 8 of the metal plate 4 after being coated and is compressively bonded thereto as required. In the compressive bonding of the reinforcing sheet 1, pressurization is performed at a pressure of, for example, around 0.15 to 10 MPa.

Thereafter, the reinforcing sheet 1 is heated.

The heating temperature is, for example, 80°C or more, preferably 90°C or more, or more preferably 100°C or more, and is usually, for example, 130°C or less, preferably 80 to 120°C, or more preferably 80 to 110°C. The heating duration is, for example, 0.5 to 20 minutes, or preferably 1 to 10 minutes.

When the heating temperature and the heating duration are below the above-described lower limit, there may be a case where the metal plate 4 and the constraining layer 3 cannot be sufficiently brought into close contact with each other or the reinforcing properties at the time of reinforcement of the metal plate 4 cannot be sufficiently improved.

In the above-described heating of the reinforcing sheet 1, the reinforcing sheet 1 only is heated by using a heating device such as a heat gun.

Alternatively, using the above-described heating device, the metal plate 4 only, or furthermore, both of the reinforcing sheet 1 and the metal plate 4 can be also heated. When the metal plate 4 only is heated, heat of the heating device is thermally conducted to the reinforcing sheet 1.

In the case of the metal plate 4 after the electrodepostiion coating and before the intermediate coating, the reinforcing sheet 1 and/or the metal plate 4 can be heated by putting the metal plate 4 into a drying oven (a heating oven) used in the intermediate coating or the top coating.

Furthermore, in the case of the metal plate 4 after the intermediate coating and before the top coating, the reinforcing sheet 1 and/or the metal plate 4 can be heated by putting the metal plate 4 into a drying oven used in the top coating.

In this way, the metal plate 4 can be reinforced.

In the above-described reinforcing method, the metal plate 4 can be surely reinforced by bonding the reinforcing sheet 1 which includes the reinforcing layer 2 and the constraining layer 3 to the metal plate 4.

The reinforcing layer 2 is prepared from the thermoplastic resin composition, so that even when bonded by heating, it is not cured and shrunk and therefore, it is possible to prevent that stress is applied to the metal plate 4 to occur an appearance defect caused by a deformation.

In addition, the reinforcing sheet 1 is bonded to the metal plate 4 after being coated, so that a bonded surface serves as a coated surface at the time of reinforcement of the metal plate 4. Therefore, even when the moisture is present at the bonded surface, corrosion caused by the moisture can be prevented and the metal plate 4 can be reinforced, while the improvement of the corrosion resistance is attempted.

As a result, the reinforcing structure of the metal plate 4 which is reinforced by the reinforcing method of the metal plate 4 described above has excellent reinforcing properties, appearance, and corrosion resistance.

In the above-described description, the reinforcing sheet 1 is bonded to the metal plate 4 to be then heated, so that the metal plate 4 is reinforced. Alternatively, for example, the reinforcing sheet 1 is heated at 80°C or more in advance and then, the heated reinforcing sheet 1 is bonded to the metal plate 4, so that the metal plate 4 can be also reinforced.

In such a case, the preferable heating temperature of the reinforcing sheet 1 is the same as that of the reinforcing sheet 1 after being bonded to the metal plate 4 described above.

In order to heat the reinforcing sheet 1, the above-described heat gun, drying oven (heating oven), or the like is used.

Alternatively, the metal plate 4 is heated at, for example, 80°C or more in advance and then, the reinforcing sheet 1 can be bonded to the heated metal plate 4. In order to heat the metal plate 4, the above-described heat gun, drying oven (heating oven), or the like can be used. Alternatively, for example, instead of the description above, the reinforcing sheet 1 can be also bonded to the metal plate 4 which is heated at a high temperature in the coating and after the elapse of a predetermined time, is brought into a state at 80°C or more by the residual heat.

Examples of the coating in this method include the above-described coatings (the electrodeposition coating, the intermediate coating, and the top coating). Preferably, the electrodeposition coating is used.

In the electrodeposition coating, the metal plate 4 is heated at, for example, 160 to 210°C. In the intermediate coating, the metal plate 4 is heated at, for example, 140 to 155°C. In the top coating, the metal plate 4 is heated at, for example, 130 to 145°C.

When being bonded to the metal plate 4 within, for example, 0.5 to 10 minutes, or preferably 1 to 5 minutes after the coating, the reinforcing sheet 1 can be bonded to the metal plate 4 which is in a state at the above-described temperature or more.

According to this method, the number of the production steps can be omitted and the metal plate 4 can be easily reinforced.

### Examples

The present invention will now be described in more detail by way of Preparation Examples, Comparative Preparation Examples, Examples, Comparative Examples, and Reference Examples. However, the present invention is not limited to the following Preparation Examples, Comparative Preparation Examples, Examples, Comparative Examples, and Reference Examples.

### (Preparation of Thermoplastic Resin Composition)

### Preparation Examples 1 and 2

In accordance with the mixing formulation shown in Table 1, components each were blended by parts by mass basis to be kneaded with a mixing roll heated at 120°C in advance, so that kneaded products of thermoplastic resin compositions in Preparation Examples 1 and 2 were prepared.

### (Preparation of Thermosetting Resin Composition)

### Comparative Preparation Example 1

In accordance with the mixing formulation shown in Table 1, components each were blended by parts by mass basis to be kneaded with a mixing roll heated at 120°C in advance, so that a kneaded product of a thermosetting resin composition in Comparative Preparation Example 1 was prepared.

[Table 1]

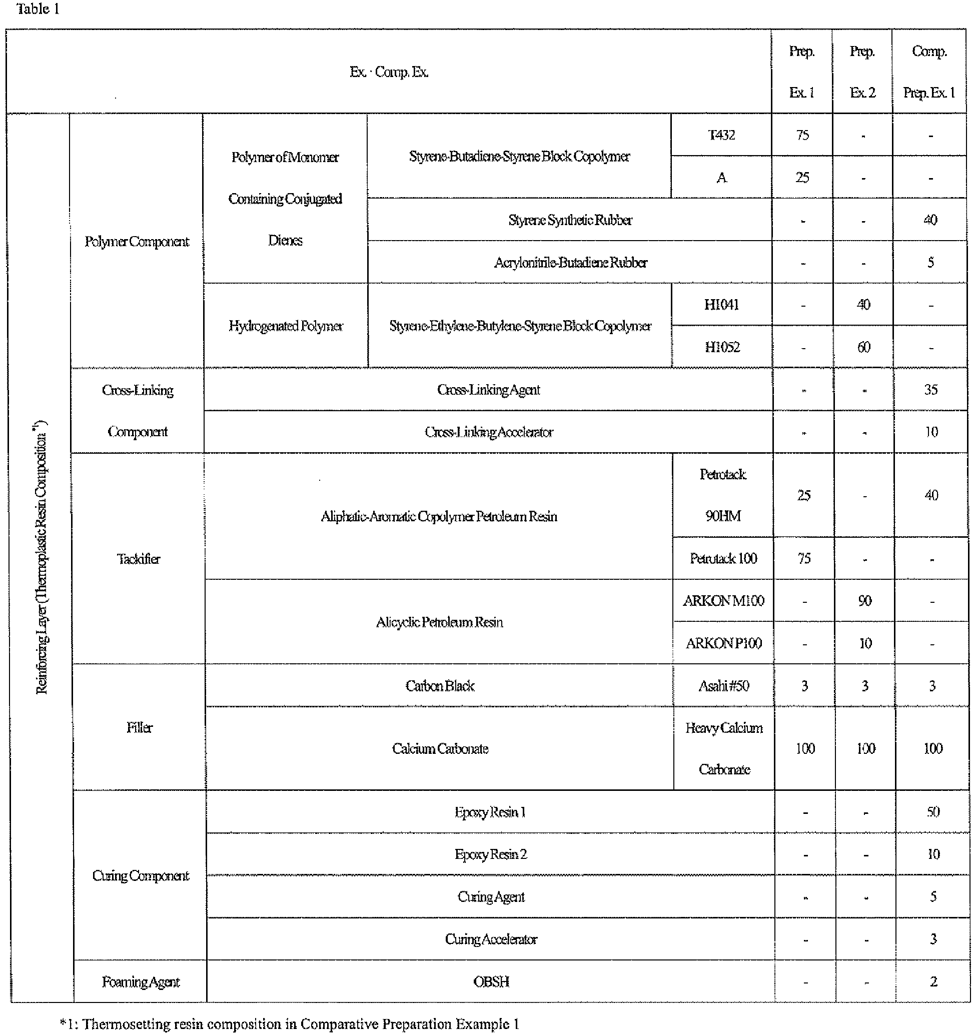

In Table 1, values for the components in the row of "Reinforcing Layer" show number of blended parts by mass.

For the components shown in Table 1, details are given in the following.

T432: trade name "Asaprene T432", a styrene-butadiene-styrene block copolymer, a ratio of styrene/butadiene: 30/70 (based on mass), a viscosity (at 25°C) of the 25 % by mass toluene solution: 3100 mPa·s, MFR (at 190°C, 2.16 kg): 0 (g/10 min), MFR (at200°C, 5 kg): below 1 (g/10 min), the durometer hardness of 75 degrees (in conformity with ISO 7619, type A), manufactured by Asahi Kasei Chemicals Corporation
A: trade name "Tufprene A", a styrene-butadiene-styrene block copolymer, a ratio of styrene/butadiene: 40/60 (based on mass), a viscosity (at 25°C) of the 25 % by mass toluene solution: 650 mPa·s, MFR (at 190°C, 2.16 kg): 2.6 (g/10 min), MFR (at 200°C, 5 kg): 13 (g/10 min), the durometer hardness of 85 degrees (in conformity with ISO 7619, type A), manufactured by Asahi Kasei Chemicals Corporation
Styrene Synthetic Rubber: trade name "Tufdene", a styrene-butadiene random copolymer, a number average molecular weight of 90000, a content of styrene of 25 mass %, a Mooney viscosity of 35 (ML1+4, at 100°C), manufactured by Asahi Kasei Corporation
Acrylonitrile-Butadiene Rubber: trade name "Nipol 1052J", a content of acrylonitrile of 33.5 mass %, a Mooney viscosity of 77.5 (ML1+4, at 100°C), solid (at normal temperature), manufactured by ZEON CORPORATION
H1041: trade name "Tuftec H1041", a styrene-ethylene-butylene-styrene block copolymer, a ratio of styrene/(ethylene and butadiene): 30/70 (based on mass), MFR (at 190°C, 2.16 kg): 0.3 (g/10 min), MFR (at 200°C, 5 kg): 3.5 (g/10 min), the durometer hardness of 84 degrees (in conformity with ISO 7619, type A), manufactured by Asahi Kasei Chemicals Corporation
H1052: trade name "Tuftec H1052", a styrene-ethylene-butylene-styrene block copolymer, a ratio of styrene/(ethylene and butadiene): 20/80 (based on mass), MFR (at 190°C, 2.16 kg): 3 (g/10 min), MFR (at 200°C, 5 kg): 10 (g/10 min), the durometer hardness of 67 degrees (in conformity with ISO 7619, type A), manufactured by Asahi Kasei Chemicals Corporation
Cross-Linking Agent: pulverized sulfur
Cross-Linking Accelerator: trade name "NOCCELER DM", a thiazole compound (di-2-benzothiazolyl disulfide), manufactured by OUCHI SHINKO CHEMICAL INDUSTRIAL CO., LTD.
Petrotack 90HM: trade name, an aliphatic-aromatic copolymer petroleum resin, a softening point (ring and ball test) of 88°C, manufactured by TOSOH CORPORATION
Petrotack 100: trade name, an aliphatic-aromatic copolymer petroleum resin, a softening point (ring and ball test) of 96°C, manufactured by TOSOH CORPORATION
ARKON M100: trade name, an alicyclic petroleum resin, a softening point (ring and ball test) of 100°C, manufactured by Arakawa Chemical Industries, Ltd.
ARKON P100: trade name, an alicyclic petroleum resin, a softening point (ring and ball test) of 100°C, manufactured by Arakawa Chemical Industries, Ltd.
Asahi #50: trade name, carbon black, manufactured by ASAHI CARBON CO., LTD.
Heavy Calcium Carbonate: manufactured by MARUO CALCIUM CO., LTD.
Epoxy Resin 1: trade name "JER 834", a bisphenol A epoxy resin, an epoxy equivalent of 230 to 270 g/eq., manufactured by Japan Epoxy Resins Co., Ltd.
Epoxy Resin 2: trade name "Adekaresin EP4080E", a bisphenol A epoxy resin, an epoxy equivalent of 215 g/eq., manufactured by ADEKA CORPORATION
Curing Agent: trade name "DDA50", dicyandiamide, a thermally curable type, manufactured by PTI JAPAN LTD.
Curing Accelerator: trade name "K-37Y", an amino acid compound (aminododecanoic acid), manufactured by PTI JAPAN LTD.
OBSH: 4,4'-oxybis (benzensulfonyl hydrazide)

### (Fabrication of Reinforcing Sheet)

### Example 1

The kneaded product of the thermoplastic resin composition in Preparation Example 1 was disposed to be sandwiched between a constraining layer which was made of an aluminum foil (Isezaki JIS H 4160, A3003H-O, manufactured by SUMIKEI ALUMINUM FOIL Co., Ltd.) and had a thickness of 0.12 mm and a release film. Thereafter, the kneaded product was extended by applying pressure into a sheet shape by a press molding at 120°C to fabricate a reinforcing sheet having a thickness (the total thickness of the constraining layer and the reinforcing layer, hereinafter the same) of 1.5 mm (ref: FIG. 1 (a)).

### Example 2

The kneaded product of the thermoplastic resin composition in Preparation Example 2 was disposed to be sandwiched between a constraining layer which was made of an aluminum foil (Isezaki JIS H 4160, A3003H-O, manufactured by SUMIKEI ALUMINUM FOIL Co., Ltd.) and had a thickness of 0.12 mm and a release film. Thereafter, the kneaded product was extended by applying pressure into a sheet shape by a press molding at 120°C to fabricate a reinforcing sheet having a thickness of 1.5 mm (ref: FIG. 1 (a)).

### Example 3

A reinforcing sheet having a thickness of 1.5 mm was fabricated in the same manner as in Example 1, except that a constraining layer which was made of a glass cloth (H220MK, manufactured by UNITIKA LTD.) and had a thickness of 0.20 mm was used instead of the constraining layer made of aluminum (ref: FIG. 1 (a)).

### Example 4

A reinforcing sheet having a thickness of 1.5 mm was fabricated in the same manner as in Example 2, except that a constraining layer which was made of a glass cloth (H220MK, manufactured by UNITIKA LTD.) and had a thickness of 0.20 mm was used instead of the constraining layer made of aluminum (ref: FIG. 1 (a)).

### Example 5

A reinforcing sheet having a thickness of 1.5 mm was fabricated in the same manner as in Example 1, except that a constraining layer which was made of a stainless steel plate (SUS430, manufactured by JX Metals Trading Co., Ltd.) and had a thickness of 0.10 mm was used instead of the constraining layer made of aluminum (ref: FIG. 1 (a)).

### Comparative Example 1

The thermosetting resin composition in Comparative Preparation Example 1 was extended by applying pressure into a sheet shape by a press molding, so that a reinforcing layer having a thickness of 0.54 mm was formed.

Thereafter, a constraining layer which was made of a glass cloth (H220MK, manufactured by UNITIKA LTD.) and had a thickness of 0.20 mm was bonded to the surface of the reinforcing layer and subsequently, a release film was laminated on the back surface of the reinforcing layer, so that a reinforcing sheet having a thickness of 0.74 mm was fabricated.

### Comparative Example 2

A reinforcing sheet having a thickness of 1.04 mm was fabricated in the same manner as in Comparative Example 1, except that the thickness of the reinforcing layer was changed to 0.84 mm.

### (Evaluation)

### 1. Reinforcing Properties (Bending Strength at Displacement of 1 mm)

### A. Reinforcing Properties of Reinforcing Sheets in Examples 1 to 5

Each of the reinforcing sheets in Examples 1 to 5 was trimmed into a size of 150 mm × 25 mm. The release film was peeled from the reinforcing layer and then, the reinforcing layer was bonded to a cold rolled steel plate (SPCC-SD, manufactured by Nippon Testpanel Co., Ltd.) having a size of 150 mm × 25 mm × 0.7 mm at room temperature (at 20°C) to be thereafter heated at 80°C for 3 minutes, so that the steel plate was reinforced. In this manner, a test piece was fabricated.

Thereafter, in a state where the steel plate faced upwardly, the test piece was supported with a span of 100 mm and a testing bar was lowered from above to the center in the longitudinal direction thereof at a rate of 5 mm/min. The bending strength (N) at the time when the reinforcing layer was displaced by 1 mm after allowing the testing bar to come into contact with the steel plate was measured, so that the reinforcing properties of the reinforcing sheet was evaluated. The results are shown in Table 2.

### B. Reinforcing Properties of Reinforcing Sheets before Curing in Comparative Examples 1 and 2

The reinforcing properties of the reinforcing sheets in Comparative Examples 1 and 2 were tested under the same conditions as those in Examples 1 to 5, so that the reinforcing properties of the reinforcing sheets before curing were evaluated. The results are shown in Table 2.

### C. Reinforcing Properties of Reinforcing Sheets after Curing in Comparative Examples 1 and 2

The reinforcing properties of the reinforcing sheets after heating were evaluated in the same manner as in Examples 1 to 5, except that the heating conditions of the reinforcing sheets in Comparative Examples 1 and 2 were changed to be 180° C and 20 minutes.

The reinforcing sheets in Comparative Examples 1 and 2 were allowed to foam and cure by heating and the thickness of the reinforcing layers became 1.7 mm and 2.6 mm, respectively. The results are shown in Table 2.

### D. Reinforcing Properties of Steel Plate (Reference Example 1)

A cold rolled steel plate (SPCC-SD, manufactured by Nippon Testpanel Co., Ltd.) only having a size of 150 mm × 25 mm × 0.7 mm in which the reinforcing sheet was not included was measured as Reference Example 1 in the same manner as described above. The strength of the steel plate at a displacement of 1 mm was 6.3 (N).

### 2. Appearance (Strain Amount)

### A. Strain Amount in Examples 1 to 4

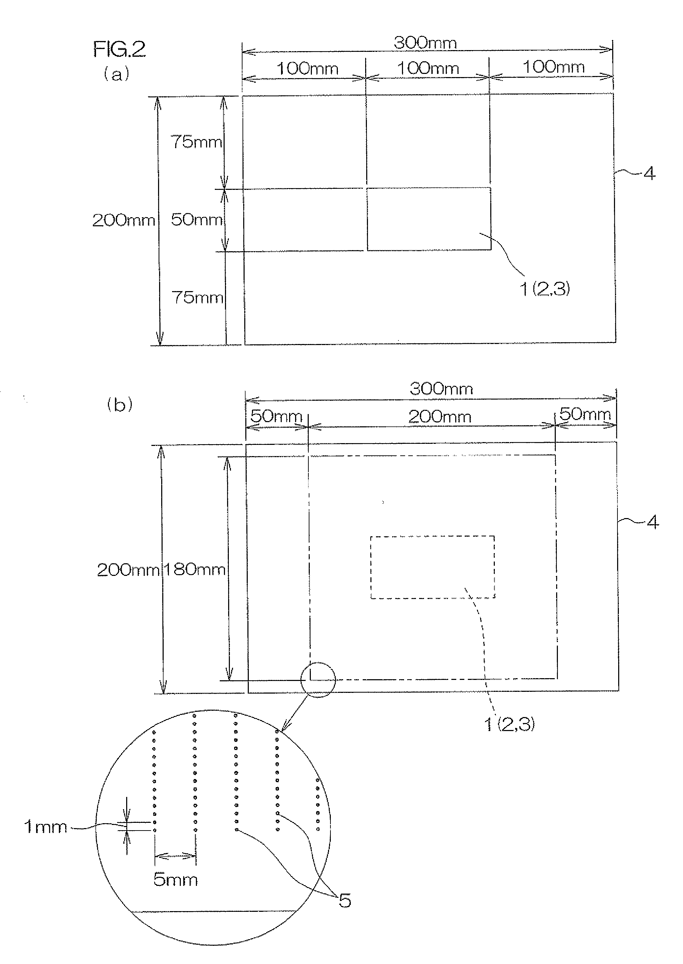

Each of the reinforcing sheets in Examples 1 to 4 was trimmed into a size of 100 mm × 50 mm. The release film was peeled from the reinforcing layer and then, as referred in FIG. 2 (a), a reinforcing layer 2 was bonded to the central portion of a cold rolled steel plate 4 (SPCC-SD, manufactured by Nippon Testpanel Co., Ltd.) having a size of 300 mm × 200 mm × 0.7 mm at room temperature (at 20°C) and subsequently, the reinforcing layer 2 was compressively bonded to the surface of the steel plate 4 with a 2 kg roller.

Thereafter, as referred in FIG. 2 (b), on the back surface of the steel plate 4, points which were formed with a pitch of 1 mm at the center in the widthwise direction (corresponding to 180 mm in width) and with a pitch of 5 mm at the center in the longitudinal direction (corresponding to 200 mm in length) were defined as measuring points 5. The position in the thickness direction of each of the measuring points 5 was measured.

Thereafter, the steel plate 4 and a reinforcing sheet 1 were allowed to stand vertically and in such a state, they were heated at 80°C for 3 minutes or at 120°C for 1 minute, so that the reinforcing sheet 1 was adhered to the steel plate 4 to reinforce the steel plate 4.

The steel plate 4 and the reinforcing sheet 1 were cooled to room temperature and the above-described position in the thickness direction of the measuring points was measured again.

The difference of the positions in the thickness direction of the measuring points 5 before and after heating was measured. The appearance of the steel plate 4 was evaluated by calculating the maximum value thereof as the strain amount.

The measurement of the strain amount was repeated three times and the strain amount was calculated as the average value of the obtained values.

The result is shown in Table 2.

### B. Strain Amount in Comparative Examples 1 and 2

The strain amount was calculated in the same manner as in the above-described "A. Strain Amount in Examples 1 to 4", except that the heating conditions were changed to be 180°C for 20 minutes, so that the appearance of the steel plate 4 was evaluated.

The reinforcing layer was allowed to foam and cure.

The results are shown in Table 2.

### 3. Pressure-Sensitive Adhesion (Reinforcing Layer)

Each of the reinforcing layers only in Examples 1 to 4 was bonded to a steel plate (SPCC-SD, manufactured by Nippon Testpanel Co., Ltd.) at normal temperature (at 25°C) to be thereafter heated at 80°C for 3 minutes or at 120°C for 1 minute and then, the pressure-sensitive adhesion with respect to the steel plate was measured. The results are shown in Table 2.

[Table 2]

**Table 2**

| | | Ex.1 | Ex.2 | Ex.3 | Ex.4 | Ex.5 | Comp.Ex.1 | | Comp.Ex.2 | | Ref.Ex.1 |
|---|---|---|---|---|---|---|---|---|---|---|---|
| | | | | | | | Before Curing | After Curing | Before Curing | After Curing | |
| Reinforcing Layer | Thermoplatic Resin Composition | Prep.Ex.1 | Prep.Ex.2 | Prep.Ex.1 | Prep.Ex.2 | Prep.Ex.1 | - | - | - | - | - |
| | Thermoseting Resin Composition | - | - | - | - | - | Comp.Prep.Ex.1 | | Comp.Prep.Ex.1 | | |
| | Thickness (mm) | 1.38 | 1.38 | 1.3 | 0.13 | 1.4 | 0.54 | 1.7 | 0.84 | 2.6 | |
| Constraining Layer | Metal Foil/Glass Cloth | Aluminum Foil | Aluminum Foil | Glass Cloth | Glass Cloth | Stainless Foil | Glass Cloth | Glass Cloth | Glass Cloth | Glass Cloth | - |
| | Thickness (mm) | 0.12 | 0.12 | 0.2 | 0.2 | 0.1 | 0.2 | 0.2 | 0.2 | 02 | |
| Reinforcing Properties (N) | Bending Strength at Displacement of 1mm | 20.6 | 20.4 | 13.6 | 13.5 | 25.0 | 7.0 | 209 | 7.1 | 28.9 | 63 |
| Strain Amount (µm) | Heating 80°C for 3 minutes | 11 | 11 | 10 | 10 | 12 | - | - | - | - | - |
| | Heating 120°C for 1 minute | 12 | 11 | 10 | 10 | 12 | - | - | - | - | - |
| | Heating 180°C for 20 minutes | - | - | - | - | - | - | 135 | - | 167 | - |
| Pressure-Sensitive Adhesion (N/25 mm) | Heating 80°C for 3 minutes | 30 | 32 | 31 | 31 | 33 | - | - | - | - | - |
| | Heating 120°C for 1 minute | 110 | 112 | 112 | 113 | 110 | - | - | - | - | - |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The reinforcing method of a metal plate is used in the reinforcement of the metal plate used in various industrial products.

## Claims

1. A reinforcing method of a metal plate comprising:
bonding a reinforcing sheet including a constraining layer and a reinforcing layer which is laminated on a surface of the constraining layer and is prepared from a thermoplastic resin composition to a metal plate after being coated.

2. The reinforcing method of a metal plate according to claim 1, wherein
the thermoplastic resin composition contains a polymer of a monomer containing conjugated dienes and/or its hydrogenated polymer.

3. The reinforcing method of a metal plate according to claim 2, wherein
the thermoplastic resin composition further contains a tackifier.

4. The reinforcing method of a metal plate according to claim 3, wherein
the mixing ratio of the tackifier with respect to 100 parts by mass of the polymer and the hydrogenated polymer is 40 to 200 parts by mass.

5. The reinforcing method of a metal plate according to claim 1, wherein
the constraining layer is a metal foil and/or a glass cloth.

6. The reinforcing method of a metal plate according to claim 5, wherein
the metal foil is made of stainless steel and/or aluminum.

7. The reinforcing method of a metal plate according to claim 1, wherein
the reinforcing sheet is bonded to the metal plate and then, the reinforcing sheet is heated to be 80°C or more.

8. The reinforcing method of a metal plate according to claim 1, wherein
the reinforcing sheet is heated to be 80°C or more in advance and then, the heated reinforcing sheet is bonded to the metal plate.

9. The reinforcing method of a metal plate according to claim 1, wherein
the reinforcing sheet is bonded to the metal plate which is in a state of 80°C or more.

10. A reinforcing structure of a metal plate comprising:
reinforcing a metal plate after being coated by allowing a reinforcing sheet to be bonded thereto, wherein
the reinforcing sheet includes a constraining layer and a reinforcing layer which is laminated on a surface of the constraining layer and is prepared from a thermoplastic resin composition.
